# EUROPEAN PATENT APPLICATION

(11) **EP 2 843 587 A1**
(43) Date of publication of application: **04.03.2015**
(21) Application number: 13181902.1
(22) Date of filing: 27.08.2013
(51) Int. Cl.: G06F 21/64

(54) **Method for generating evidence-data for a long-term data storage system for datasets**

(71) Applicant: OpenLimit SignCubes AG, 6341 Baar (CH)
(72) Inventor: The designation of the inventor has not yet been filed
(74) Representative: Gross, Felix

(57) **Abstract**

Method for generating evidence-data for a long-term storage system for datasets (1, 2, 3) being coupled with at least one evidence-data dataset (30) with at least one time stamp dataset (25), wherein
a) for the at least one evidence-data dataset (30) at least one reduced hash-tree dataset is computed with an á priori defined procedure, e.g. according to RFC 4998 or RFC 6283,
b) the at least one evidence-data dataset (30) together with the coupled at least one reduced hash-tree dataset is stored in a first memory means, in particular an archive.

## Description

The invention is concerned with a method for generating a long-term data storage system for datasets with the features of claim 1.

It is a frequent problem to ensure the validity of datasets which need to be stored for a long time. In case e.g. a cryptographic method is found to be unreliable or broken, all respective evidence-data for the datasets need to be updated. Therefore, efficient updating mechanisms are required.

The generation of the evidence-data can be performed with Merkle hash-trees as described in RFC 4998 (ASN.1 encoding) and RFC 6283 (XML encoding). The direct storage of hash-trees is not described and therefore the implementation varies between manufacturers.

The method with the features of claim 1 makes the handling of evidence more efficient.

For the generation of evidence-data for a long-term data storage system datasets are being coupled with at least one evidence-dataset with at least one time stamp dataset, wherein
a) for the at least one evidence-dataset at least one reduced hash-tree dataset is computed with an á priori defined procedure, e.g. according to RFC 4998 or RFC 6283,
b) the at least one evidence-dataset together with the coupled at least one reduced hash-tree dataset is stored in a first memory means, in particular an archive.

It is part of the invention to use evidence-record datasets as described in the RFCs mentioned above for large archives to store the evidence-data. It is part of the invention to use algorithms that make the handling of the evidence-data in a large archive efficient.

The invention simplifies the migration of large data covered by evidence-record datasets from one application to another since the evidence-record dataset is stored in a well-defined way through RFC 4998 or RFC 6283. These RFCs might at one point in time be replaced or updated by other equivalent definitions. It is important that the evidence record is clearly defined á priori, not necessarily by the RFC 4998 or RFC 6283.

Some embodiments are shown in the following Figures.
- Fig. 1: showing a Merkle hash-tree for some datasets;
- Fig. 2: a reduced hash-tree for the example given in Fig. 1;
- Fig. 3: a reduced hash-tree with a link;
- Fig. 4: a reduced hash-tree with a link and a revocation information;
- Fig. 5: a hash-tree with a renewed time stamp;
- Fig. 6: a renewed reduced hash-tree.

Before describing some embodiments, the meaning of certain terms is described.

A long-term data storage system for datasets is to be understood as an archive. The evidence-record datasets 30, e.g. according to the RFC 4998 or RFC 6268 are generated in a way that the integrity of the data can be proven or validated.

A time stamp dataset is a time stamp without an explicitly mentioned RFC.

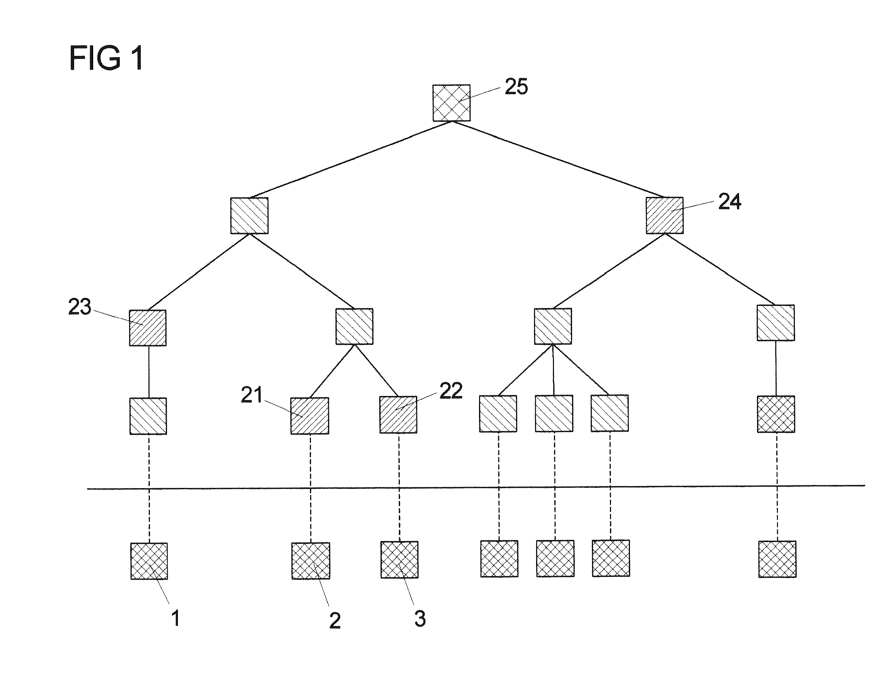

A revocation dataset is a revocation information without an explicit mentioning of an RFC or certain data structures. Fig. 1 shows schematically a Merkle hash-tree with coupled datasets 1, 2, 3 and other datasets; the datasets themselves do not belong to the hash-tree.

On top of the hash-tree is a time-stamp dataset 25. The valid signature of the time-stamp dataset 25 guarantees the integrity of all associated datasets as long as the hash-and the signature algorithm is strong. The datasets 1, 2, 3 typically comprise information which require a long-term storage, e.g. land register records or patent documents. The long-term storage can be determined by legal provisions and can last e.g. for 3 or more than 10 years or even indefinitely.

For each of the datasets 1, 2, 3 hash-datasets 21, 22 are generated and a hash-tree with intermediate hash-datasets 23, 24 is generated. Intermediate hash-datasets 23, 24 allow for an increased flexibility in the ordering of hash value computations. For the top of the tree a time stamp dataset 25 is generated.

The time-stamp dataset 25 applies to all hash-datasets 21, 22, 23, 24 in the tree structure.

The storage of hash-trees as evidence-data for long-time storage is currently proprietary and might be error prone since one error in the structure might affect all coupled datasets 1, 2, 3. Migration of evidence-records from one application to another is robust, i.e. the data integrity is strong, because the data structures are well defined and every two distinct evidence-records are independent.

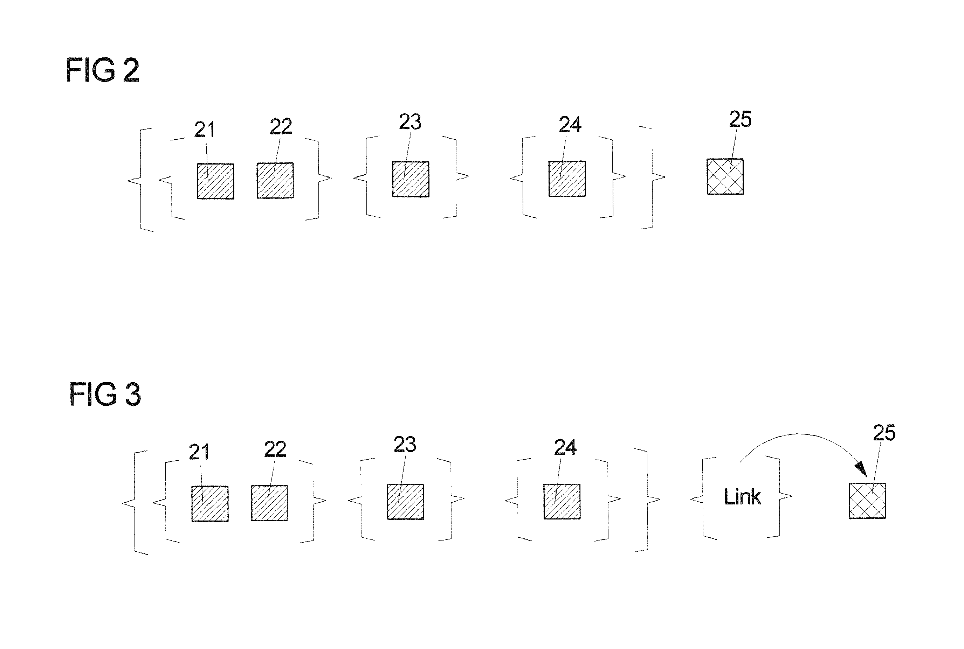

Part of the method described herein is the immediate generation of the evidence-data (see Fig. 2) specifically for every dataset 1, 2, 3. This evidence-data could be an evidence-record dataset 30 as defined by RFC 4998 or RFC 6283 or other data which prove the validity of the dataset. An evidence-record dataset 30 as defined by the respective RFCs is well known by every application supporting the respective RFC. Since the RFCs are widely accepted and an evidence-record dataset 30 is well-defined this dataset is suited for long-term storage.

The generation of evidence-record datasets 30 from hash-trees like the one shown in Fig. 1 is described schematically in Fig. 2.

The hash-datasets 21, 22, 23, 24 are stored in a list of lists. Hash-datasets 21, 22, 23, 24 from the same level of the tree share one list each. The first list in the inner level comprises two hash-datasets 21, 22. On the same level two more lists comprise one dataset 23, 24 each.

The hash-datasets 21, 22, 23, 24 together with the time-stamp dataset 25 form a reduced hash-tree as described in the respective RFCs. A reduced hash-tree contains the minimum of hash-datasets to be able to validate the top-most hash-dataset stored in the time-stamp dataset 25.In the example of Fig. 1 the hash-datasets 21, 22 in the first sequence represent the documents 2, 3.

Together with the intermediate hash-datasets 23, 24 and the time-stamp dataset 25 they form a reduced hash-tree. This reduced hash-tree comprises the schematically evidence-record dataset 30.

The reduced hash-tree shown in Fig. 2 relates to the documents 2, 3. The further intermediate hashes 23, 24 are chosen so that the computation of the hash value at the top of the hash tree is possible, subject to the condition that a minimal number of hashes need to be included into the evidence records dataset or reduced hash tree, as stipulated by the RFCs.

The evidence-record dataset 30 is therefore well-defined and this makes it easy to migrate the data from one application to another.

An error in the structure of an evidence-record dataset 30 per dataset affects only the coupled dataset 2, 3 and therefore, the embodiment of the invention stabilizes the long-time storage of evidence-record datasets 30 against failure. If in the future the mechanisms to store datasets 1, 2, 3 are changed, the dataset "evidence-record" 30 will not be affected because the data structure is well-defined. This means that structure of the evidence-record dataset is defined down to the bit level. This is in contrast to hash trees e.g. as SQL-Text, XML-Text, proprietary MySQL or in an Oracle-database.

In one embodiment of the invention - schematically depicted in Fig. 3 - an option to store the time-stamp dataset 25 separate from the evidence-record dataset 30 via a link 26 from the evidence-record dataset 30 to the time-stamp dataset 25 exists. In this case the time-stamp data set 25 belongs to the RFC evidence record structure. With the mere reference to the time-stamp dataset 25 the well define RFC conform evidence record is altered and comprises a proprietary part. But the advantage is gained that the one-time reference on the time-stamp dataset 25 is easier to process than a previous, more complex hash-tree.

The linkage of the time-stamp dataset 25 can reduce duplication of data since the time-stamp dataset 25 is stored only once.

From time to time the evidence-data needs refresh to stay current. Typically the following actions are performed:
1) Adding of a revocation dataset to evidence-data.
2) Renewal of time stamp dataset.
3) Renewal of hash-algorithm.

In general, these actions are defined in RFC 4998 and RFC 6283. In the following these actions will be described in more detail for the application to the invention.

Ad 1) Adding of a revocation dataset to evidence-data.

The addition of a revocation dataset 28 to evidence-data ensures the revocation dataset 28 is present if it is needed for verification purposes.

In one embodiment of the invention the gathering of the revocation dataset 28 of the duplicated time stamp datasets must only be done once for each duplicated time stamp dataset. Therefore, the incorporation of the revocation dataset 28 into the time stamp data dataset might duplicate data but the gathering of the revocation dataset could be done once and is therefore efficient.

In another embodiment the revocation dataset 28 could be stored apart from the time stamp dataset 25 with only a link to the revocation dataset 28.

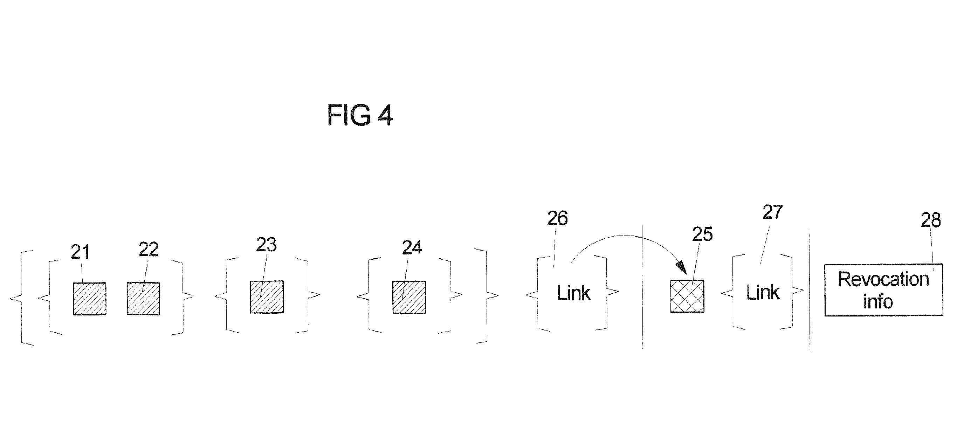

This can reduce the duplication of data if duplicated data is stored only once. For clarity, the situation with linked time stamp dataset 25 and linked revocation dataset 28 is shown in Fig. 4.

Ad 2) Renewal of time stamp dataset.

From time to time there is a need to renew the time stamp dataset 25. One reason for this can be the relative weakness of the cryptographic signature of the time stamp dataset 25. The renewal of the time stamp dataset 25 comprises the adding of new evidence-data with a fresh time stamp dataset 25. The fresh evidence-data is built from the previous time stamp dataset 25.

It is part of the invention that renewal of time stamp dataset 25 of the duplicated time stamp datasets must only be done once for each duplicated time stamp dataset 25. Therefore, renewal of time stamp datasets is efficient.

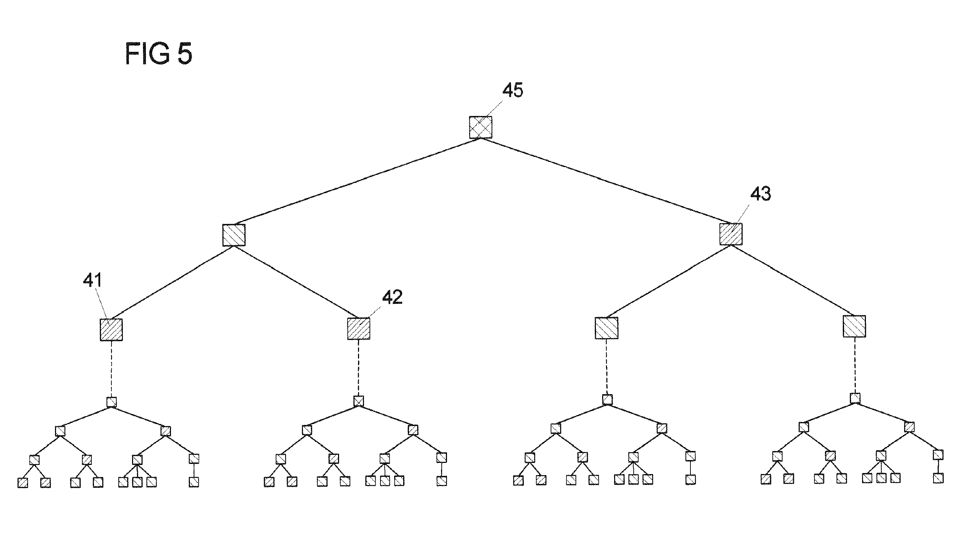

For clarity, Fig. 5 shows renewal of time stamp datasets 41, 42 with a newly generated intermediate hash-tree. On top of the newly generated hash-tree is a fresh time-stamp dataset 45. Below the time stamp datasets 41, 42 it is shown the virtual reconstruction of the former hash-trees which have time-stamp datasets 41 and 42 on top as described in the respective RFC's.

It is part of the invention that the virtual reconstruction of the former hash-trees work efficient with reduced hash-trees for time-stamp renewal.

This is a kind of virtual reconstruction of a hash tree. Indeed a time stamp dataset 25 - which might be stored multiple times in an archive - is only used once for the renewal of the time stamp dataset 25.

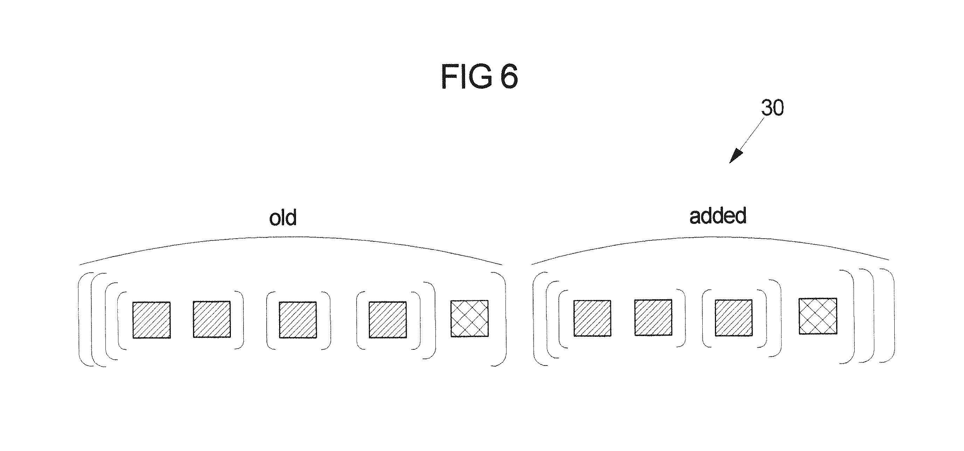

Fig. 6 schematically shows the new reduced hash-tree 41, 42, 43 and the time-stamp dataset 45 concatenated to the previous evidence-data. For the sake of clarity optional linkage of time stamp dataset and revocation dataset is omitted. In one embodiment the temporarily built hash-tree is immediately reduced and the evidence-data is stored per dataset. In a further embodiment the time stamp dataset is stored apart from basic evidence-data with a link from evidence-data to time stamp dataset. This can reduce the duplication of data since the time stamp dataset and / or the revocation dataset is stored only once.

Ad 3) Renewal of hash-algorithm.

From time to time there is a need to renew the used hash-algorithm. One reason for this could be the relative cryptographic weakness of the used hash-algorithm.

In general, the renewal of the hash-algorithm enforces the generation of evidence-data per dataset as it is described in RFC 4998 or RFC 6283. Part of the invention is the immediate generation of evidence-data per dataset so this step is efficient.

For large long-term data storage systems the invention obsoletes the storage of hash-trees as evidence-data. The invention favors to store evidence-data per dataset. The evidence-data per dataset could be an evidence-record dataset 30 as described in RFC 4998 or RFC 6283, or - to reduce time-stamp dataset duplication or revocation dataset duplication - a structure which consists of reduced hash-tree(s) and link(s) to stored apart time stamp datasets and revocation datasets. To accomplish this, temporarily built hash-trees are reduced immediately after building.

The invention is efficient for the steps of gathering revocation information, renewal of time stamp dataset and renewal of hash-algorithm. The invention let duplicate data (e.g. time stamp datasets and revocation datasets) but the invention has the option to store time stamp datasets and revocation datasets apart from the base evidence-data which can reduce the duplication.

For the purpose of this description, the term "evidence-data dataset" implies that the integrity of a coupled dataset can be proven. Evidence-records as defined in the respective RFCs are examples of "evidence-data". A hash-tree is an other example of evidence-data.

### Reference Numbers

- 1: dataset
- 2: dataset
- 3: dataset

- 21: hash-dataset
- 22: hash-dataset
- 23: hash-dataset
- 24: hash-dataset
- 25: timestamp-dataset
- 26: link
- 27: link
- 28: revocation dataset

- 30: evidence-record dataset

- 41: hash-dataset
- 42: hash-dataset
- 43: hash-dataset
- 45: timestamp-dataset

## Claims

1. Method for generating evidence-data for a long-term storage system for datasets (1, 2, 3) being coupled with at least one evidence-data dataset (30) with at least one time stamp dataset (25), wherein
a) for the at least one evidence-data dataset (30) at least one reduced hash-tree dataset is computed with an á priori defined procedure, e.g. according to RFC 4998 or RFC 6283,
b) the at least one evidence-data dataset (30) together with the coupled at least one reduced hash-tree dataset is stored in a first memory means, in particular an archive.

2. Method according to claim 1, wherein during a renewal of the at least one evidence-data dataset (30) at least one new evidence-data dataset is generated from the previous at least one evidence-data dataset (30) by generating at least one new time stamp dataset (45), in particular by augmenting the previous evidence-data dataset (30).

3. Method according to claim 1 or 2, wherein the hash-algorithm for generating the at least one reduced hash-tree dataset is renewed by accessing the already stored at least one evidence-data dataset (30) and the at least one new evidence-data record is augmented with the newly generated at least one reduced hash-tree dataset.

4. Method according to at least one of the preceding claims, wherein the at least one evidence-data dataset (30) is coupled with at least one time stamp dataset (25).

5. Method according to at least one of the preceding claims, wherein the at least one time stamp dataset (25, 45) is coupled at least to one revocation dataset (28).

6. Method according to at least one of the preceding claims, wherein for the at least one evidence-data dataset (30) the at least one time stamp dataset (25) is replaced by a time stamp dataset pointer (26) and the new time stamp dataset is stored in a second memory means.

7. Method according to at least one of the preceding claims, wherein for the at least one evidence-data dataset (30) and / or the at least one time stamp dataset (25) the at least one revocation dataset (28) is replaced by a revocation dataset pointer (27) and the at least one revocation dataset (28) is stored in a third memory means.

8. Method according to at least one of the preceding claims, wherein the renewal of the at least one time stamp (25) and / or the at least one revocation dataset (28) is performed only on evidence-data datasets (30) with identical time stamp datasets (25).

9. Method according to at least one of the preceding claims, wherein the at least one evidence-data dataset (30) comprises an XML structure according to RFC 6283 or a binary structure according to RFC 4998.
